# EUROPÄISCHE PATENTSCHRIFT

(11) **EP 4 188 760 B1**
(45) Veröffentlichungstag und Bekanntmachung des Hinweises auf die Patenterteilung: **31.12.2025**
(21) Anmeldenummer: 21743117.0
(22) Anmeldetag: 08.07.2021
(51) Int. Cl.: B60T 8/17

(54) **VERZÖGERUNGSVERFAHREN EINES FAHRZEUGGESPANNS**
METHOD FOR DECELERATING A VEHICLE COMBINATION
PROCÉDÉ DE DÉCÉLÉRATION D'UNE COMBINAISON DE VÉHICULES

(30) Priorität: 30.07.2020 DE 102020120144
(43) Veröffentlichungstag der Anmeldung: 07.06.2023
(73) Patentinhaber: ZF CV Systems Europe BV, 1170 Brüssel (BE)
(72) Erfinder: ECKERT, Horst, 31547 Rehburg-Loccum (DE)
(74) Vertreter: Ohlendorf, Henrike
(86) Internationale Anmeldenummer: PCT/EP2021/068923
(87) Internationale Veröffentlichungsnummer: WO 2022/022968

(56) Entgegenhaltungen:
- EP-A1- 2 570 312
- EP-A1- 3 533 673
- WO-A1-2008/084092
- WO-A1-93/18949
- DE-A1- 102013 103 068
- DE-A1- 102014 011 500
- DE-A1- 102017 011 802
- DE-A1- 3 736 807
- US-A1- 2012 215 412

## Beschreibung

Die Erfindung betrifft ein Verfahren zur Verzögerung eines Fahrzeuggespanns mit einem Zugfahrzeug und wenigstens einem Anhängefahrzeug mit eigener Anhängerbremsanlage gemäß Anspruch 1.

Das Zugfahrzeug und das wenigstens eine Anhängefahrzeug des Fahrzeuggespanns weisen pneumatisch betätigbare Radbremsen an jedem Rad auf. Die Radbremsen sind in ihrer Bremswirkung über den jeweils anliegenden Bremsdruck einstellbar. Über ein Betriebsbremsventil der Zugfahrzeugbremsanlage wird Bremsdruck zu den Radbremsen des Zugfahrzeugs durchgeschaltet, sobald ein Fahrer über ein Bremspedal ein Betriebsbremsventil betätigt.

DE 10 2016 013 054 A1 offenbart ein Verfahren zur Verzögerung eines Fahrzeuggespanns, wobei das Anhängefahrzeug eine eigene Anhängerbremsanlage aufweist. Die Radbremsen der Anhängerbremsanlage werden über einen Anhängerbremsdruck beträgt, welcher von einer Zugfahrzeugbremsanlage eingestellt wird. Eine Bremssteuereinheit der Zugfahrzeugbremsanlage überwacht das Bremsverhalten des Zugfahrzeugs oder des Fahrzeuggespanns und stellt bedarfsweise den jeweiligen Bremsdruck an den Radbremsen der betreffenden Räder des Zugfahrzeugs sowie den Anhängerbremsdruck ein. Bei der bekannten Anordnung kommunizieren die Bremssteuereinheit des Zugfahrzeugs und die Bremselektronik des Anhängefahrzeugs miteinander. Die Bremselektronik des Anhängefahrzeugs teilt der Bremssteuereinheit des Zugfahrzeugs Bremsschlupfinformationen mit Aussage über den Bremsschlupf an bestimmten Achseinheiten des Anhängefahrzeugs mit. Die Bremssteuereinheit des Zugfahrzeugs ermittelt auf der Grundlage der Bremsschlupfinformationen des Anhängefahrzeugs einen Differenzschlupf. Ergibt die Bewertung einer Bremsschlupfdifferenz einen Bremsbedarf am Anhängefahrzeug, so steuert die Bremssteuereinheit des Zugfahrzeugs einen entsprechenden Anhängerbremsdruck aus, welcher an einem Anhänger-kontrollventil für die Anhängebremsanlage zur Verfügung gestellt wird.

Die EP2570312A1 betrifft ein Verfahren zur Steuerung der Bremsbetätigung einer Bremsanlage einer Zugmaschine, die einen Anhänger zieht. Die Zugmaschine verfügt lediglich über ein elektromechanisches Bremssystem, während der Anhänger über ein pneumatisches Bremssystem verfügt. Der Zweck der Steuerung besteht darin, die Kupplungskraft zwischen der Zugmaschine und dem Anhänger nahe einer gewünschten Kupplungskraft zu halten. Die Bremskraft der elektromechanischen Bremsaktuatoren wird direkt durch Messung der Klemmkraft, der Reibungskraft und/oder der Position eines Betätigungselements gemessen, das einen Bremsbelag in Richtung einer Bremsscheibe bewegt. Auf Basis der gemessenen Bremskraft wird eine ungefähre Fahrzeugverzögerung berechnet. Darüber hinaus wird die tatsächliche Verzögerung des Fahrzeugs gemessen. Falls die geschätzte Fahrzeugverzögerung von der tatsächlichen Fahrzeugverzögerung abweicht, wird dieser Unterschied als Indikator dafür gewertet, dass eine Änderung der Ansteuerung des Anhängerbremssystems und/oder der Ansteuerung der elektromechanischen Bremsaktuatoren der Zugmaschine erforderlich ist.

Die WO1993018949A1 beschreibt ein elektronisches Bremssystem für ein Fahrzeug mit Hauptbremsen und Fahrzeugretarder, wobei ein elektrisches Bremsbedarfssignal von einem einzelnen Bremspedal generiert wird und wobei der Retarder in einem geschlossenen Regelkreis mit Rückmeldung des gemessenen Retardermoments arbeitet, variabel oder in kleinen Stufen, während die Pedalstellung von Null, oder Ruhezustand, bis zu einem Punkt innerhalb seines Bewegungsbereiches verändert wird, der so berechnet wird, daß sich im wesentlichen die maximale Retarderleistung auf der Basis der Gesamtmasse des Fahrzeugs ergibt, so daß für einen Vollastzustand dieser Teilbereichspunkt bei einer geringen Pedalablenkung auftritt, und für einen unbeladenen Zustand, bei dem ein bestimmter Retarder eine höhere Verlangsamung erzeugt, dieser Punkt bei einer höheren Pedalablenkung erfolgt, wobei in beiden Fällen das Drücken des Pedals über den errechneten Teilbereichspunkt hinaus den Beginn einer Hauptbremsung in einem offenen Steuerkreis ohne Verlangsamungsrückmeldung bewirkt, um das Retardermoment zu ergänzen.

Die EP3533673A1 beschreibt einen Fahrzeugzug und ein Verfahren zur Bremssteuerung eines Fahrzeugzuges, bestehend aus einem Zugfahrzeug und einem Anhängefahrzeug, wobei das Zugfahrzeug eine pneumatische/hydraulische Zugfahrzeugbremsanlage und das Anhängefahrzeug eine pneumatische/hydraulische Anhängerbremsanlage aufweist, mit einem elektrisch steuerbaren Anhängersteuerventil, welchem zumindest eine in einer elektronischen Steuereinrichtung abgespeicherte Anhängersteuerventilkennlinie zur Steuerung eines Anhängerbremsdruckes der Anhängerbremsanlage für einen Normalbetrieb des Fahrzeugzuges zugeordnet ist, wobei die für den Normalbetrieb des Fahrzeugzuges abgespeicherte Anhängersteuerventilkennlinie bei Erkennen oder Prognostizieren eines von dem Normalbetrieb abweichenden oder als potenziell unzulässig bewerteten Sonderbetriebs des Fahrzeugzuges nter Berücksichtigung von für diese Situation relevanten Parametern variiert oder durch eine Anhängersteuerventilkennlinie für einen Sonderbetrieb ersetzt wird.

Insbesondere für Nutzfahrzeuge sind Dauerbremsanlagen bekannt, welche ein länger andauerndes und verschleißfreies Bremsen ermöglichen, ohne in ihrer Bremsleistung nachzulassen. Da eine normale Betriebsbremse nicht zum Dauerbetrieb geeignet ist und bei längerem Betrieb zu Überhitzung oder gar zum Bremsversagen (Fading) neigen kann, ist die Dauerbremse in der Lage, die Betriebsbremse wirksam zu entlasten. In Nutzfahrzeugen kommen im Wesentlichen zwei Arten von Dauerbremsanlagen zum Einsatz, nämlich zum einen die Motorbremssysteme und zum anderen der sogenannte Retarder. Aus DE 101 44 302 A1 ist eine Bremsvorrichtung für Fahrzeuggespanne bekannt, die eine Betriebsbremsanlage und eine Dauerbremsanlage aufweist. Um den Vorteil der Verschleißfreiheit von Dauerbremsen optimal ausnutzen zu können, ist bei der bekannten Bremsvorrichtung vorgesehen, dass bei Bremsungen, bei denen die vom jeweiligen Fahrzustand abhängige Bremskraft der Dauerbremse ausreicht, primär, beziehungsweise ausschließlich, die Dauerbremse zum Einsatz zu bringen. Nur bei stärkeren Bremsungen, bei denen die Bremskraft der Dauerbremse nicht ausreicht, kommt die Dauerbremsanlage gemeinsam mit der Betriebsbremsanlage zum Einsatz. Bei der bekannten Bremsvorrichtung ist eine Überwachungseinrichtung vorgesehen, welche die maximal mögliche Dauerbremskraft ermittelt, welche in Abhängigkeit vom aktuellen Fahrzustand durch die Dauerbremse erzeugbar ist. Im Zugfahrzeug des Fahrzeuggespanns werden die Betriebsbremsanlage und die Dauerbremsanlage in Abhängigkeit vom aktuellen Fahrzustand angesteuert und zwar zentral über das Bremspedal, wobei die Bremskraftaufteilung automatisch gesteuert ist.

Die Anforderung einer Dauerbremsanlage des Zugfahrzeugs durch den Fahrer kann in kritischen Fahrsituationen die Fahrstabilität des aus mehreren Teilfahrzeugen bestehenden Fahrzeuggespanns gefährden.

Der Erfindung liegt die Aufgabe zugrunde, bei einem Verfahren zur Verzögerung eines Fahrzeuggespanns nach Anforderung einer Dauerbremsanlage durch den Fahrer in jeder Fahrsituation die Stabilität des Fahrzeuggespanns sicherzustellen.

Diese Aufgabe wird erfindungsgemäß durch ein Verfahren mit den Merkmalen des Anspruchs 1 gelöst. Erfindungsgemäß erfasst die Bremssteuereinheit die Verzögerungsanforderung des Fahrers an eine Dauerbremsanlage, nachdem der Fahrer manuell über einen Hebel oder eine Schalteinrichtung Verzögerung mittels der Dauerbremsanlage angefordert hat. Während der Ansteuerung der Dauerbremsanlage aufgrund der Verzögerungsanforderung des Fahrers wird das Erreichen wenigstens eines vorgegebenen Sicherheitskriteriums anhand wenigstens einer laufend ermittelten Bremszustandsgröße überwacht. Wird bei Umsetzung der Verzögerungsanforderung an die Dauerbremsanlage das Sicherheitskriterium erreicht, wird ein noch zu bewirkender Anteil der Verzögerungsanforderung an die Dauerbremsanlage über die Anhängerbremsanlage bewirkt. An eine Steuereinheit der Dauerbremsanlage wird ein höherer Wert als die momentan vorliegende Bremsanforderung des Fahrers nicht mehr ausgegeben, sondern aufgrund des Erreichens des Sicherheitskriteriums umgeschaltet auf die Bewirkung der weiteren Verzögerung über die Anhängerbremsanlage. Hierzu veranlasst die Bremssteuereinheit der Zugfahrzeugbremsanlage die Einstellung eines entsprechenden Anhängerbremsdrucks für die Anhängerbremsanlage.

In einer vorteilhaften Ausführungsform der Erfindung wird als ein erstes Sicherheitskriterium, bei dessen Erreichen, ein noch zu bewirkender Anteil an noch zu bewirkenden Verzögerungsanforderung an die Dauerbremsanlage alternativ über die Anhängerbremsanlage bewirkt wird, eine kritische Fahrsituation des Fahrzeuggespanns und eine für diese Fahrsituation vorgesehene Maximalgeschwindigkeit vorgegeben. Als erste Bremszustandsgröße zur Überwachung des Erreichens des Sicherheitskriteriums wird die augenblickliche Fahrgeschwindigkeit des Fahrzeuggespanns herangezogen und mit der Maximalgeschwindigkeit verglichen. Erreicht die aktuelle Geschwindigkeit des Fahrzeuggespanns die vorgegebene Maximalgeschwindigkeit, so wird an die Dauerbremsanlage ein höheres von der Dauerbremsanlage zu erbringendes Bremsmoment nicht mehr ausgegeben und der noch zu bewirkende Anteil der vom Fahrer angeforderten Verzögerung statt der Dauerbremse über die Anhängerbremsanlage bewirkt.

Als kritische Fahrsituation, für die eine Maximalgeschwindigkeit zur Umschaltung des noch zu bewirkenden Anteils der Verzögerungsanforderung an die Dauerbremsanlage über die Anhängerbremsanlage wird insbesondere eine der folgenden kritischen Fahrsituationen vorgegeben:
- eine aktuelle oder als bevorstehend erkannte Fahrt in einer stärkeren Kurve, wie beispielsweise in einer Autobahnausfahrt oder bei einer Fahrt auf einer Serpentinenstrecke,
- eine aktuelle oder als bevorstehend erkannte Fahrt in einer Gefällestrecke,
- eine Außentemperatur von weniger als beispielsweise 3 Grad Celsius,
- eine nasse oder mit Schnee oder Eis bedeckte Fahrbahn,
- eine geringe Achslast derjenigen Achse, auf welche die Dauerbremse einwirkt, in Bezug zu einer zulässigen Achslast (leer/teilbeladen),
- eine relativ kleine Masse des Zugfahrzeugs in Bezug zur zulässigen Masse des Zugfahrzeugs (leer/teilbeladen) und gleichzeitig relativ hoher Masse des Anhängefahrzeugs.

Die Bewertung der vorstehenden Fahrsituationen erfolgt insbesondere unter Berücksichtigung des Bremsleistungsvermögens der Dauerbremsanlage und der Fahrtgeschwindigkeit des Gespanns bei Bremsbeginn.

Als eine zweite Bremszustandsgröße wird ein den Radschlupf repräsentierender Bremsschlupfwert eines Rades derjenigen Achse oder ein achsbezogener Bremsschlupfwert derjenigen Achse erfasst, auf welche die Dauerbremsanlage einwirkt. Dieser Bremsschlupfwert, welcher den Radschupf repräsentiert, wird mit einem als zweites Sicherheitskriterium vorgegebenen Grenzschlupfwert verglichen. Bei einer Zugfahrzeugbremsanlage, welche mit einem Anti-Blockiersystem ausgestattet ist, wird der Grenzschlupfwert für das Erreichen des Sicherheitskriteriums kleiner vorgegeben die Eingriffsschwelle des Anti-Blockiersystems, bei welchem Schlupf also das Anti-Blockiersystem anspricht. In vorteilhafter Ausführungsform der Erfindung wird der Grenzschlupfwert mit einem bestimmten Abstand zur Eingriffsschwelle für das Ansprechen des Anti-Blockiersystems der Zugfahrzeugbremsanlage vorgegeben.

In stabilitätskritischen Fahrsituationen kommt es somit bereits bei einem niedrigeren Bremsschlupfwert, der von der Dauerbremse beaufschlagten Achse des Zugfahrzeugs zu einer Aktivierung der Anhängerbremsanlage und zwar bei einem Bremsschlupfwert, der niedriger ist als die Eingriffsschwelle des Anti-Blockiersystems des Zugfahrzeugs. Es kommt somit nicht zu einer starken temporären Unterbremsung des Fahrzeuggespanns aufgrund eines Abwurfs der Dauerbremse durch das Anti-Blockiersystem. Darüber hinaus ist in stabilitätskritischen Fahrsituationen mit erfolgendem Abwurf der Dauerbremsanlage durch das Anti-Blockiersystems die Anhängerbremsanlage bereits aktiviert, so dass die Anforderungen an den Fahrer zur Bewältigung der Situation reduziert sind. Ohne das erfindungsgemäße Verfahren müsste der Fahrer nämlich zunächst das Bremspedal zur Aktivierung der Betriebsbremsanlagen betätigen, wobei in der Regel zunächst das Zugfahrzeug wirksame Bremskräfte aufbauen wird und daher das Anhängefahrzeug aufschiebt.

Der Gefährdung der Fahrstabilität des Fahrzeuggespanns wird weiter entgegengewirkt, wenn bei Erfassung der Voraussetzungen einer vorgegebenen kritischen Fahrsituation des Fahrzeuggespanns der über die Anhängerbremsanlage zu bewirkende Anteil der Verzögerungsanforderung an die Dauerbremsanlage erhöht wird. Vorteilhaft wird dabei unmittelbar nach Bremsbeginn von der Bremssteuereinheit des Zugfahrzeugs an die Dauerbremsanlage, beziehungsweise deren Steuereinheit, eine in diesem Fall angepasst geringere Bremsanforderung ausgegeben.

Die Sicherheit der Fahrstabilität ist insbesondere bei Fahrzeuggespannen verbessert, bei denen die Anhängerbremsanlage ein eigenes Anti-Blockiersystem aufweist, wobei eine Bremselektronik der Anhängerbremsanlage Bremsschlupfwerte der Räder des Anhängefahrzeugs erfasst und der Bremssteuereinheit der Zugfahrzeugbremsanlage ein Informationssignal mit Aussage über Bremsschlupfwerte des Anhängefahrzeugs mitteilt. Bei dieser erfindungsgemäßen Ausführungsform regelt die Bremssteuereinheit der Zugfahrzeugbremsanlage über die Einstellung des Bremsdrucks und des Anhängerbremsdrucks eine vorgegebene Schlupfdifferenz zwischen dem Zugfahrzeug und dem Anhängefahrzeug. Dabei stellt sich eine Verzögerung des Fahrzeuggespanns ein, welche sich eingestellt hätte, wenn die Dauerbremsanlage alleine das Fahrzeuggespann abgebremst hätte. Führt der Fahrer eine Bremsung des Fahrzeuggespanns über die Dauerbremsanlage durch, führt die Bremssteuereinheit der Zugfahrzeugbremsanlage eine Adaption zur Ermittlung der Verzögerungswirkung der Dauerbremsanlage auf das Fahrzeuggespann durch.

Die Bremssteuereinheit des Zugfahrzeugs legt bei Ihrer Ermittlung einer tatsächlichen Bremsschlupfdifferenz die Bremsschlupfinformation des Anhängefahrzeugs zugrunde, welche ihr über eine Kommunikationsverbindung mit der Bremselektronik der Anhängerbremsanlage mitgeteilt wird. Ergibt die Bewertung der Bremsschlupfdifferenz anhand der vorgegebenen Schlupfdifferenz zwischen dem Zugfahrzeug und dem Anhängefahrzeug einen Bremsbedarf am Anhängefahrzeug, so steuert die Bremssteuereinheit des Zugfahrzeugs einen entsprechenden Anhängerbremsdruck aus.

Ein Ausführungsbeispiel der Erfindung ist nachstehend anhand der Zeichnung näher erläutert. Es zeigen:
- Fig.1: ein pneumatisches und elektrisches Schema der Bremsanlagen eines Fahrzeuggespanns mit Zugfahrzeug und Anhängefahrzeug,
- Fig. 2: ein Flussschaubild eines Ausführungsbeispiels eines Verfahrens zur Verzögerung des Fahrzeuggespanns gemäß Fig. 1.

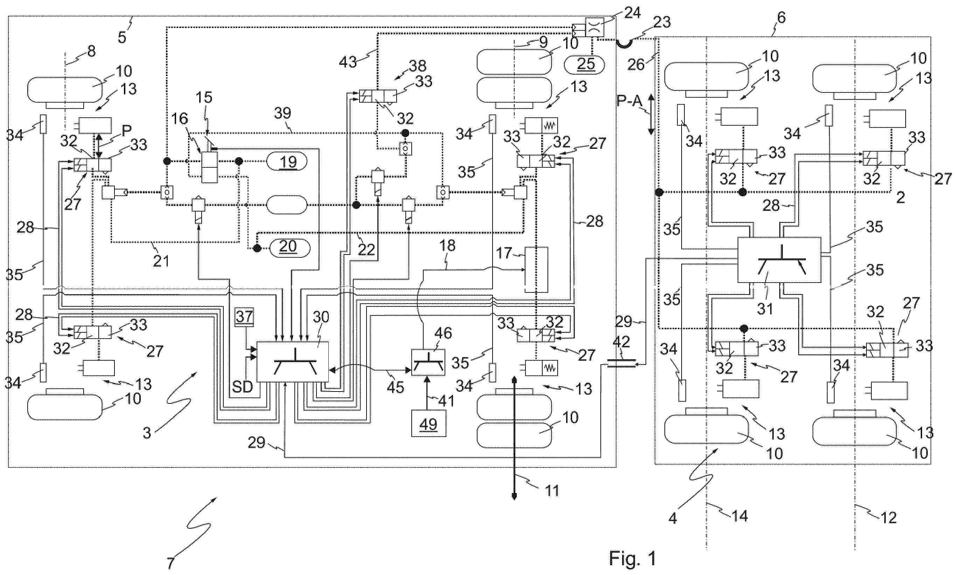

Fig. 1 zeigt einen elektrisch- pneumatischen Plan der Bremsanlagen eines Fahrzeuggespanns, nämlich der Zugfahrzeugbremsanlage 3 eines Zugfahrzeugs des Fahrzeuggespanns 7 und einer Anhängerbremsanlage 4 eines Anhängefahrzeugs 6. Elektrische Leitungen sind in dem Plan mit Volllinien und pneumatische Linien mit punktierten Linien dargestellt. Das Zugfahrzeug 5 umfasst im gezeigten Ausführungsbeispiel zwei Achsen 8, 9, an denen jeweils beidseitig Räder 10 angeordnet sind. Das Anhängefahrzeug 6 weist ebenfalls zwei Anhängerachsen 12, 14 mit jeweils Rädern 10 auf. Zum Abbremsen der Räder 10 ist jedem Rad 10 eine pneumatisch betätigbare Radbremse 13 zugeordnet, welche Teil der jeweiligen Betriebsbremsanlage eines Fahrzeugs des Fahrzeuggespanns 7 sind.

In der Fahrerkabine des Zugfahrzeugs 5 ist ein Bremspedal 15 angeordnet, welches an ein Betriebsbremsventil 16 gekoppelt ist. Der Fahrer des Zugfahrzeugs 5 kann durch Betätigen des Bremspedals 15 pneumatische Bremsleitungen 17, 18 zwischen Druckmittelvorräten 19, 20 und den Radbremsen 13 öffnen.

Im gezeigten Ausführungsbeispiel sind die Radbremsen 13 der Vorderachse 8 des Zugfahrzeugs einem gemeinsamen ersten Bremskreis 21 zugeordnet, während die Radbremsen 13 der Hinterrad 9 über einen zweiten Bremskreis 22 betätigbar sind. Der erste Druckmittelvorrat 19 ist dabei dem ersten Bremskreis 21 zugeordnet. Der zweite Bremskreis 22 der Hinterachse 9 wird über einen zweiten Druckmittelvorrat 20 mit Druckmittel versorgt. Der zweite Bremskreis 22 ist analog dem ersten Bremskreis 21 aufgebaut.

Sowohl in der Zugfahrzeugbremsanlage 3 als auch in der Anhängerbremsanlage 4 ist jeder Radbremse 13 ein Drucksteuerventil 27 vorgeschaltet, welche elektrisch ansteuerbar sind. Zum Empfang von Steuersignalen 28 sind die Drucksteuerventile 27 der Zugfahrzeugbremsanlage 3 mit einer Bremssteuereinheit 30 verbunden. Die Drucksteuerventile 27 der Anhängerbremsanlage 4 sind mit einer Bremselektronik 31 verbunden. Die Drucksteuerventile 27 sind jeweils eine Kombination von wenigstens zwei Magnetventilen, nämlich einem Einlassventil 32 und einem Auslassventil 33. Das Einlassventil 32 dient dabei prinzipiell zur Druckerhöhung beziehungsweise zum Halten des Drucks, während das Auslassventil 33 zur Reduzierung des Bremsdrucks geöffnet wird und den jeweils angeschlossenen Bremszylinder entlüftet. Das Einlassventil 32 und das Auslassventil 33 der Drucksteuerventile 27 sind vorzugsweise 2/2-Wege Ventile.

Die Zugfahrzeugbremsanlage 3 umfasst einen Kupplungskopf 23 an den die Anhängerbremsanlage 4 des Anhängefahrzeugs 6 ankuppelbar ist. Über den Kupplungskopf 23 stellt die Zugfahrzeugbremsanlage 3 einen pneumatischen Anhängerbremsdruck P-A für die Anhängerbremsanlage 4 bereit. Dabei ist dem Kupplungskopf 23 ein Anhänger-Kontrollventil 24 zugeordnet, welches die Verbindung zwischen einem dritten Druckmittelvorrat 25 und dem pneumatischen Kupplungskopf 23 beherrscht. Die Anhängerbremsanlage 4 weist einen Anhängerbremskreis 26 auf, in welchem der Anhängerbremsdruck P-A herrscht und zu allen Radbremsen 13 der Anhängerbremsanlage 4 durchschaltbar ist. Die Betätigung des Anhänger-Kontroll-Ventils 24 obliegt der Bremssteuereinheit 30 der Zugfahrzeugbremsanlage 3. Hierzu verfügt die Zugfahrzeugbremsanlage 3 über ein Anhänger-Drucksteuerventil 38, welches analog den Drucksteuerventilen 27 der Radbremsen 13 aufgebaut ist und deren Einlassventil 32 und Auslassventil 33 vor der Bremssteuereinheit 30 der Zugfahrzeugbremsanlage 3 angesteuert werden.

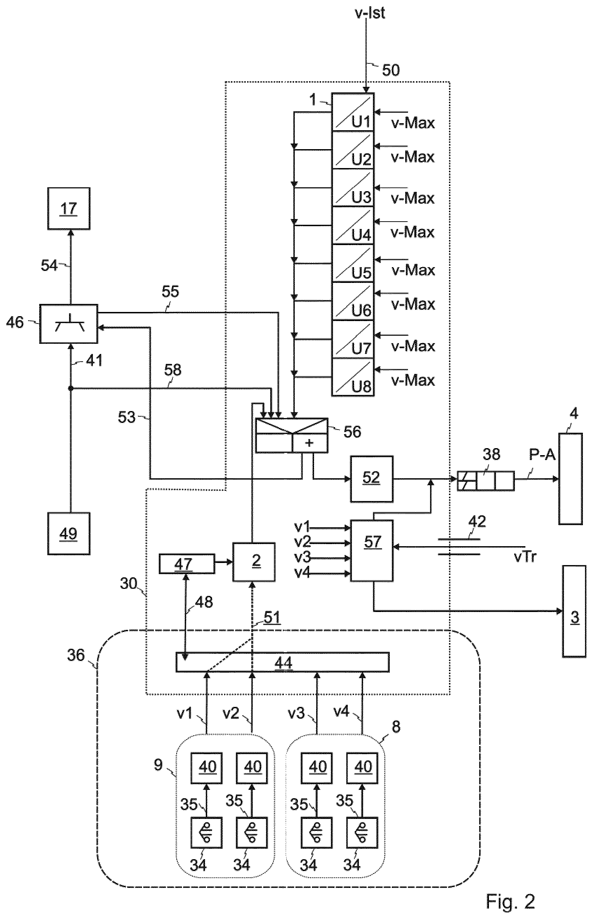

Die Bremssteuereinheit 30 und die Bremselektronik 31 sind dazu ausgebildet und vorgesehen, bedarfsweise den Bremsdruck im jeweiligen Teilfahrzeug des Fahrzeuggespanns 7 zu beeinflussen. Hierzu wird das Drehverhalten der jeweiligen Räder 10 überwacht. Jedem Rad 10 des Zugfahrzeugs 5 und jedem Rad 10 des Anhängefahrzeugs 6 ist dabei ein Drehzahlsensor 34 zugeordnet, welcher Messsignale 35 mit Aussage über das Drehverhalten des jeweiligen Rades 10 erzeugt. Aus den Messsignalen 35 der Drehzahlsensoren 34 wird die jeweilige Radgeschwindigkeit (Bezugszeichen v1, v2, v3, v4 in Fig. 2) ermittelt und als Bremsschlupfwert, welcher den Radschlupf repräsentiert, in einem Anti-Blockiersystem (Bezugszeichen 36 in Fig. 2) berücksichtigt. Die Bremssteuereinheit 30, die Drehzahlsensoren 34 und die Drucksteuerventile 27 der Zugfahrzeugbremsanlage 3 sind die wesentlichen Elemente des Anti-BlockierSystems 36 der Zugfahrzeugbremsanlage 3. Die Bremssteuereinheit 30 überwacht über die Drehzahlsensoren 34, beziehungsweise die Auswertung deren Messsignale 35, die Blockierneigung der einzelnen Räder 10. Bei Feststellen einer Blockierneigung eines einzelnen Rades 10 wirkt die Bremssteuereinheit durch Ansteuerung eines oder mehrerer Drucksteuerventile 27 und Regelung der an den Radbremsen 13 anliegenden Bremsdrücke entlang der ABS-Eingriffsschwelle (Bezugszeichen 44 in Fig. 2) einem Blockieren der Räder 10 entgegen.

Das Anhängefahrzeug 6, beziehungsweise dessen Anhängerbremsanlage 4, weist ein eigenes Anti-Blockier-System mit einer Bremselektronik 31 auf, welche analog der Bremssteuereinheit 30 über die Drehzahlsensoren 34, beziehungsweise der Auswertung deren Messsignale 35, die die Blockierneigung der Räder 10 des Anhängefahrzeugs 6 überwacht. Bei Feststellen einer Blockierneigung eines einzelnen Rades 10 wirkt die Bremselektronik 31 durch Ansteuerung eines oder mehrerer Drucksteuerventile 27 und Regelung der an den Radbremsen anliegenden Bremsdrücke entlang der Schlupfgrenze einem Blockieren der Räder 10 entgegen.

Die Bremssteuereinheit 30 des Zugfahrzeugs 5 empfängt eine Betriebsbremsanforderung 39 und leitet daraus die vom Fahrer des Fahrzeuggespanns 7 angeforderte Verzögerung her. Hierzu ist ein Bremssignalgeber an die Stellung des Bremspedals 15 im Fahrerhaus gekoppelt. Betätigt der Fahrer des Zugfahrzeugs 5 das Bremspedal 15, so wird der Bremssteuereinheit 30 eine entsprechende Betriebsbremsanforderung 39 zugeleitet. Aus der Betriebsbremsanforderung 39 ermittelt die Bremssteuereinheit 30 auf der Grundlage von entsprechenden Kennlinien, die in einem Kennfeldspeicher 37 abgelegt sind, die einzustellenden Bremsdrücke.

Das Zugfahrzeug 5 weist neben der Zugfahrzeugbremsanlage 3 eine Dauerbremsanlage 17 auf. Die Dauerbremsanlage 17 wirkt im gezeigten Ausführungsbeispiel auf die Hinterachse 9 des Zugfahrzeugs 5. Der Dauerbremsanlage 17 ist eine Steuereinheit 46 zugeordnet. Die Steuereinheit 46 und die Aktoren der Dauerbremsanlage 17 sind über eine Signalleitung 18 miteinander verbunden. Über die Signalleitung 18 steuert die Steuereinheit 46 der Dauerbremsanlage 17 die Aktoren und bewirkt Bremsleistung entsprechend einer Verzögerungsanforderung 41. Anders ausgedrückt erfolgt über die Signalleitung 18 die Ansteuerung der Dauerbremsanlage (Bezugszeichen 54 in Fig. 2), wobei gleichzeitig über die Signalleitung 18 Statusinformation der Dauerbremsanlage 17 erfassbar ist (Bezugszeichen 55 in Fig. 2). Zur Eingabe der Verzögerungsanforderung 41 an die Dauerbremsanlage 17 ist ein Betätigungshebel 49 oder eine andere Betätigungseinrichtung vorgesehen, über die der Fahrer die Dauerbremsanlage 17 in Betrieb nehmen kann. Die Verzögerungsanforderung 41 an die Dauerbremsanlage 17 kann dabei gestuft oder stufenlos erfolgen.

Die Steuereinheit 46 der Dauerbremsanlage kommuniziert mit der Bremssteuereinheit 30 der Zugfahrzeugbremsanlage über eine Signalleitung 45. Über die Signalleitung 45 erhält die Bremssteuereinheit 30 Statusinformationen 55 der Dauerbremsanlage 17, beispielsweise die Zulässigkeit des Dauerbremseinsatzes über manuelle Anforderung (Hauptschalter, interne Sperrung oder ähnliches). Ferner kann die Statusinformation 55 das Nennmoment der Dauerbremsanlage 17 oder den Status einer stufigen der stufenlosen Dauerbremsanlage beinhalten. Während einer Bremsung wird das aktuelle Bremsmoment der Dauerbremsanlage 17 mitgeteilt. Insbesondere beinhaltet die Statusinformation 55, welche von der Steuereinheit 46 mitgeteilt wird, die von der Dauerbremsanlage 17 vom Fahrer angeforderte Verzögerung, das heißt die über den Betätigungshebel 49 vorgegebene Verzögerungsanforderung 41 an die Dauerbremsanlage 17.

Über die Kommunikation zwischen der Steuereinheit 46 der Dauerbremsanlage 17 erfasst die Bremssteuereinheit 30 der Zugfahrzeugbremsanlage 3 somit die manuelle Verzögerungsanforderung 41 des Fahrers an die Dauerbremsanlage 17.

Während der Ansteuerung der Dauerbremsanlage 17 erfasst die Bremssteuereinheit 30 die Verzögerungsanforderung des Fahrers an die Dauerbremsanlage 17 und überwacht den Verzögerungsvorgang gemäß dem nachstehend anhand von Fig. 2 dargestellten Verfahren.

Will der Fahrer des Fahrzeuggespanns die Dauerbremsanlage 17 in Betrieb nehmen und betätigt den Betätigungshebel 49, so wird entsprechend der manuellen Betätigung der Steuereinheit 46 der Dauerbremsanlage 17 eine Verzögerungsanforderung 41 vorgegeben. Die Steuereinheit 46 und die Dauerbremsanlage 17 sind über eine Steuerleitung 18 (Fig. 1) signalübertragend miteinander verbunden, so dass eine Ansteuerung 54 der Dauerbremsanlage 17 durch die Steuereinheit 46 erfolgen kann. Die Ansteuerung 54 der Dauerbremsanlage 17 erfolgt in Abhängigkeit der Verzögerungsanforderung 41.

Die Bremssteuereinheit 30 der Zugfahrzeugbremsanlage ist zur Erfassung 58 der Verzögerungsanforderung 41 an die Dauerbremsanlage 17 ausgebildet. Nach Erfassung 58 der Verzögerungsanforderung erfolgt eine Überwachung 56 des Erreichens wenigstens eines vorgegebenen Sicherheitskriteriums 1, 2 anhand laufend ermittelter Bremszustandsgrößen 50, 51. Bei Erreichen eines der vorgegebenen Sicherheitskriterien 1, 2 wird ein noch zu bewirkender Anteil 52 der Verzögerungsanforderung 41 an die Dauerbremsanlage 17 über die Anhängerbremsanlage 4 bewirkt. Bei Erreichen des Sicherheitskriteriums 1, 2 bewirkt die Bremssteuereinheit 30 eine Limitierung 53 der durch die Dauerbremsanlage 17 zu bewirkenden Verzögerung. Das heißt, dass die Steuereinheit 46 der Dauerbremsanlage 17 im Fall der Limitierung 53 von der Dauerbremsanlage 17 keine weitere Verzögerung anfordert und der noch zu bewirkende Anteil 52 der Verzögerungsanforderung 41 an die Dauerbremsanlage 17 über die Anhängerbremsanlage 4 bewirkt wird. Hierzu stellt die Bremssteuereinheit 30 über das Anhänger-Drucksteuerventil 38 einen Anhängerbremsdruck P-A bereit, welcher den noch zu bewirkenden Anteil 52 der Verzögerungsanforderung 41 entspricht.

Als ein erstes Sicherheitskriterium 1 ist eine oder mehrere kritische Fahrsituationen des Fahrzeuggespanns 7 vorgegeben. Im gezeigten Ausführungsbeispiel sind mehrere kritische Fahrsituationen U1, U2, U3, U4, U5, U6, U7, U8 des Fahrzeuggespanns berücksichtigt, wobei für jede dieser Fahrsituationen U1, U2, U3, U4, U5, U6, U7, U8 jeweils eine spezifische Maximalgeschwindigkeit v-max vorgegeben ist. Eine erste kritische Fahrsituation U1 ist im gezeigten Ausführungsbeispiel eine aktuell vorliegende oder als beginnend erkannte Kurvenfahrt, insbesondere in einer stärkeren Kurve, wie beispielsweise in einer Autobahnausfahrt oder bei einer Fahrt in einer Serpentinenstrecke. Als zweite kritische Fahrsituation U2 ist eine aktuell vorliegende oder als beginnend erkannte Fahrt in einer Gefällestrecke vorgesehen. Die kritischen Fahrsituationen können auch von einer Außentemperatur abhängig gemacht werden, so dass als weitere kritische Fahrsituation U3 eine bestimmte Außentemperatur, beispielsweise geringer als +3 Grad Celsius, vorgegeben ist. Als weitere kritische Fahrsituation U4 ist eine nasse Fahrbahn, beziehungsweise eine mit Schnee oder Eis bedeckte Fahrbahn vorgesehen. Als kritische Fahrsituation U5 wird bevorzugt weiterhin berücksichtigt die Achslast der von der Dauerbremsanlage 17 beaufschlagten Hinterachse 9 des Zugfahrzeugs 5. Hierbei wird der Beladungszustand des Zugfahrzeugs berücksichtigt, das heißt das Sicherheitskriterium 1 berücksichtigt die Achslast der von der Dauerbremsanlage 17 beaufschlagten Hinterachse 9 des Zugfahrzeugs in Bezug zur maximalen zulässigen Achslast der Hinterachse 9. Als weitere kritische Fahrsituation U6 wird die Masse des Zugfahrzeugs 5 des Fahrzeuggespanns 7 in Bezug zur zulässigen Masse des Zugfahrzeugs 5 bei gleichzeitig relativ roher Masse des Anhängefahrzeugs 6 berücksichtigt.

Die kritischen Fahrsituationen werden insbesondere unter Berücksichtigung des Bremsleistungsvermögens der Dauerbremse 17 vorgegeben. Weiterhin berücksichtigt die Bewertung einer Fahrsituation als kritisch die Fahrgeschwindigkeit des Fahrzeuggespanns 7 bei Bremsbeginn und wird umso mehr als kritisch betrachtet, je höher die Fahrgeschwindigkeit des Fahrzeuggespanns 7 für die jeweils vorliegende Fahrsituation ist.

Als laufend ermittelte Bremszustandsgröße 50 zur Überwachung 56 und Bewertung der als erstes Sicherheitskriterium 1 vorgegebenen kritischen Fahrsituationen U1, U2, U3, U4, U5, U6, U7, U8 des Fahrzeuggespanns 7 wird die augenblickliche Fahrgeschwindigkeit v-ist des Fahrzeuggespanns 7 berücksichtigt.

Als eine zweite Bremszustandsgröße 51 wird ein dem Radschlupf repräsentierender Bremsschlupfwert v2 derjenigen Achse 11 erfasst, auf welche die Dauerbremsanlage 17 einwirkt. Diese Achse, auf welche die Dauerbremsanlage 17 einwirkt, ist im gezeigten Ausführungsbeispiel die Hinterachse 9 des Zugfahrzeugs 5. Der Bremsschlupfwert v2 wird über Drehzahlsensoren 34 an den Rädern der betreffenden Achse aufgenommen. Vorzugsweise wird der als zweite Bremszustandsgröße 51 berücksichtigte Bremsschlupfwert v2 von einem Anti-Blockiersystem 36 der Zugfahrzeugbremsanlage 3 zur Verfügung gestellt. Der als zweite Bremszustandsbremsgröße 51 herangezogene Bremsschlupfwert v2 wird mit einem als zweites Sicherheitskriterium 2 vorgegebenen Grenzschlupfwert 47 verglichen. Erreicht oder überschreitet die Bremszustandsgröße 51 den Grenzschlupfwert 47 so erfolgt eine Aufteilung der Verzögerungsanforderung 41 an die Dauerbremsanlage 17, das heißt eine Limitierung 53 der aktuellen Verzögerungsanforderung an die Dauerbremsanlage 17 und Bereitstellung eines Anhängerbremsdrucks P-A entsprechend dem noch zu bewirkenden Anteil 52 der Verzögerungsanforderung 41 an die Dauerbremsanlage 17, so dass der noch zu bewirkende Anteil 52 der Verzögerungsanforderung 41 über die Anhängerbremsanlage 4 bewirkt wird.

Der Grenzschlupfwert 47 wird mit einem Abstand 48 zu einer Eingriffsschwelle 44 für das Ansprechen des Anti-Blockiersystems 36 der Zugfahrzeugbremsanlage 3 vorgegeben. Auf diese Weise ist sichergestellt, dass rechtzeitig vor dem Eingreifen des Anti-Blockiersystems 36 eine Limitierung 53 der Verzögerungsanforderung 41 an die Dauerbremsanlage 17 erfolgt.

Über die Kommunikationsverbindung 42 zwischen dem Zugfahrzeug 5 und dem Anhängefahrzeug 6 teilt die Bremselektronik der Anhängerbremsanlage 4 der Bremssteuereinheit 30 der Zugfahrzeugbremsanlage 3 laufend Bremsschlupfwerte vTr des Anhängefahrzeugs mit. Die Bremsschlupfwerte des Anhängefahrzeugs 6 werden von der Bremselektronik laufend durch Auswertung der Messsignale der Drehzahlsensoren 34 an den Rädern des Anhängefahrzeugs 6 ermittelt. Der Bremsschlupfwert vTr des Anhängefahrzeugs 6 wird vorteilhaft von einem Anti-Blockiersystem des Anhängefahrzeugs 6 ermittelt, insbesondere durch Mittelung der Bremsschlupfwerte einzelner Räder oder Achsen des Anhängefahrzeugs 6.

Die Bremssteuereinheit 30 der Zugfahrzeugbremsanlage nimmt auf der Grundlage des erfassten Bremsschlupfwerts vTr des Anhängefahrzeugs 6 sowie der Bremsschlupfwerte V1, V2, V3, V4 des Zugfahrzeugs 5 eine Bremskraftverteilung 57 vor. Entsprechend der Bremskraftverteilung 57 auf die Zugfahrzeugbremsanlage 3 und die Anhängerbremsanlage 4 beziehungsweise einzelne Achsen des jeweiligen Fahrzeugs 5, 6 des Fahrzeuggespanns 7 werden Bremsdrücke P in der Zugfahrzeugbremsanlage 3 und der Anhängerbremsdruck P-A für die Anhängerbremsanlage 4 ermittelt und bereitgestellt. Über die Einstellung des Bremsdrucks P und des Anhängerbremsdrucks P-A regelt die Bremssteuereinheit 30 die vorgegebene Schlupfdifferenz (Bezugszeichen SD in Fig. 1) zwischen dem Zugfahrzeug 5 und dem Anhängefahrzeug 6.

Weist das Fahrzeuggespann 7 mehr als ein Anhängefahrzeug 6 auf, erfolgt eine Ansteuerung der Anhängerbremsanlagen und eine Regelung der Schlupfdifferenz SD derart, dass jedes Anhängefahrzeug 6 innerhalb des Fahrzeuggespanns 7 einen gemittelten Bremsschlupfwert aufweist, welcher gleich oder größer ist als der Bremsschlupfwert desjenigen Anhängefahrzeugs 6 welches bezüglich des betreffenden Anhängefahrzeugs näher am Zugfahrzeug 5 fährt. Ziel der Regelung der Schlupfdifferenz und der Bremskraftverteilung kann dabei sein, dass alle Teilfahrzeuge des Fahrzeuggespanns 7, insbesondere die Anhängefahrzeuge 6, jeweils gleiche Bremsschlupfwerte vTr aufweisen.

### Bezugszeichenliste (Bestandteil der Beschreibung)

1. Erstes Sicherheitskriterium
2. Zweites Sicherheitskriterium
3. Zugfahrzeugbremsanlage
4. Anhängerbremsanlage
5. Zugfahrzeug
6. Anhängefahrzeug
7. Fahrzeuggespann
8. Vorderachse
9. Hinterachse
10. Rad
11. Achse mit Dauerbremse
12. Anhängerachse hinten
13. Radbremse
14. Anhängerache vorn
15. Bremspedal
16. Betriebsbremsventil
17. Dauerbremsanlage
18.Signalleitung
19. Druckmittelvorrat
20. Druckmittelvorrat
21. Erster Bremskreis
22. Zweiter Bremskreis
23. Kupplungskopf
24. Anhänger-Kontrollventil
25. Druckmittelvorrat
26. Anhängerbremskreis
27. Drucksteuerventil
28. Steuersignal
29. Informationssignal
30. Bremssteuereinheit
31. Bremselektronik
32. Einlassventil
33. Auslassventil
34. Drehzahlsensor
35. Messsignal
36. Antiblockiersystem
37. Kennfeldspeicher
38. Anhänger-Drucksteuerventil
39. Betriebsbremsanforderung
40. Auswertung
41. Verzögerungsanforderung Dauerbremse
42. Kommunikationsverbindung (CAN)
43. Bremsdruckleitung Anhänger
44. ABS-Eingriffsschwelle
45. Signalleitung
46. Steuereinheit Dauerbremsanlage
47. Grenzschlupfwert
48. Abstand
49. Betätigungshebel Dauerbremse
50. erste Bremszustandsgröße
51. zweite Bremszustandsgröße
52. Anteil an Verzögerungsanforderung
53. Limitierung Verzögerungsanforderung
54. Ansteuerung Dauerbremse
55. Statusinformation der Dauerbremsanlage
56. Überwachung
57. Bremskraftverteilung
58. Erfassung
U1 Fahrsituation
U2 Fahrsituation
U3 Fahrsituation
U4 Fahrsituation
U5 Fahrsituation
U6 Fahrsituation
U7 Fahrsituation
U8 Fahrsituation
Vmax Maximalgeschwindigkeit
P Bremsdruck
P-A Anhängerbremsdruck
V1 Bremsschlupfwert
V2 Bremsschlupfwert
V3 Bremsschlupfwert
V4 Bremsschlupfwert
vTr Bremsschlupfwert Anhänger
SD Schlupfdifferenz

## Patentansprüche

1. Verfahren zur Verzögerung eines Fahrzeuggespanns (7) mit einem Zugfahrzeug (5) und wenigstens einem Anhängefahrzeug (6) mit eigener Anhängerbremsanlage (4), wobei eine Bremssteuereinheit (30) einer Zugfahrzeugbremsanlage (3) das Bremsverhalten des Zugfahrzeugs (5) oder des Fahrzeuggespann (7) überwacht und bedarfsweise den jeweiligen Bremsdruck (P) an den Radbremsen (13) der betreffenden Räder (10) des Zugfahrzeugs (5) sowie einen Anhängerbremsdruck (P-A) einstellt, wobei die Bremssteuereinheit (30) eine manuelle Verzögerungsanforderung (41) des Fahrers an eine Dauerbremsanlage (17) erfasst und während der Ansteuerung (54) der Dauerbremsanlage (17) das Erreichen wenigstens eines vorgegebenen Sicherheitskriteriums (1, 2) anhand wenigstens einer laufend ermittelten Bremszustandsgröße (50, 51) überwacht und bei Erreichen des Sicherheitskriteriums (1, 2) ein noch zu bewirkender Anteil (52) der Verzögerungsanforderung (41) an die Dauerbremsanlage (17) über die Anhängerbremsanlage (4) bewirkt wird, **dadurch gekennzeichnet, dass** eine Bremselektronik (31) der Anhängerbremsanlage (4) Bremsschlupfwerte (vTr) der Räder (10) des Anhängefahrzeugs (6) erfasst und der Bremssteuereinheit (30) der Zugfahrzeugbremsanlage (3) ein Informationssignal (29) mit Aussage über Bremsschlupfwerte (vTr) des Anhängefahrzeugs (6) mitteilt, wobei die Bremssteuereinheit (30) der Zugfahrzeugbremsanlage (3) über die Einstellung des Bremsdrucks (P) und des Anhängerbremsdrucks (P-A) eine vorgegebene Schlupfdifferenz (SD) zwischen dem Zugfahrzeug (5) und dem Anhängefahrzeug (6) regelt.

2. Verfahren nach Anspruch 1, **dadurch gekennzeichnet, dass** als ein erstes Sicherheitskriterium (1) eine kritische Fahrsituation (U1, U2, U3, U4, U5, U6, U7, U8) des Fahrzeuggespanns (7) und eine für diese Fahrsituation (U1, U2, U3, U4, U5, U6, U7, U8) vorgesehene Maximalgeschwindigkeit (v-max) vorgegeben ist und als eine erste Bremszustandsgröße (50) die Geschwindigkeit (v-Ist) des Fahrzeuggespanns herangezogen und mit der Maximalgeschwindigkeit (v-Max) verglichen wird.

3. Verfahren nach Anspruch 1 oder 2, **dadurch gekennzeichnet, dass** als eine zweite Bremszustandsgröße (51) ein den Radschlupf repräsentierender Bremsschlupfwert (v2) eines Rades (10) derjenigen Achse (11) oder ein achsbezogener Bremsschlupfwert (v2) derjenigen Achse (11) erfasst wird, auf welche Achse (11) die Dauerbremsanlage (17) einwirkt, und der Bremsschlupfwert (v2) mit einem als zweites Sicherheitskriterium (2) vorgegebenen Grenzschlupfwert (47) verglichen wird.

4. Verfahren nach Anspruch 3, **dadurch gekennzeichnet, dass** der Grenzschlupfwert (47) mit einem Abstand (48) zu einer Eingriffsschwelle (44) für das Ansprechen eines Antiblockiersystems (36) der Zugfahrzeugbremsanlage (3) vorgegeben ist.

## Claims

1. Method for decelerating a vehicle combination (7) which has a towing vehicle (5) and at least one trailer vehicle (6) having its own trailer braking system (4), a brake control unit (30) of a towing vehicle braking system (3) monitoring the braking behavior of the towing vehicle (5) or the vehicle combination (7) and, if necessary, adjusting the relevant brake pressure (P) at the wheel brakes (13) of the relevant wheels (10) of the towing vehicle (5) as well as a trailer brake pressure (P-A), the brake control unit (30) detecting a manual deceleration request (41) from the driver to a continuous braking system (17) and, during the activation (54) of the continuous braking system (17), monitoring whether at least one predetermined safety criterion (1, 2) is met on the basis of at least one continuously determined braking state variable (50, 51) and, when the safety criterion (1, 2) is met, a portion (52) of the deceleration request (41) still to be carried out at the continuous braking system (17) being carried out via the trailer braking system (4), **characterized in that**
a brake electronics assembly (31) of the trailer braking system (4) detects brake slip values (vTr) of the wheels (10) of the trailer vehicle (6) and communicates an information signal (29) containing a statement regarding brake slip values (vTr) of the trailer vehicle (6) to the brake control unit (30) of the towing vehicle braking system (3), the brake control unit (30) of the towing vehicle braking system (3) controlling a predetermined slip difference (SD) between the towing vehicle (5) and the trailer vehicle (6) by adjusting the brake pressure (P) and the trailer brake pressure (P-A).

2. Method according to claim 1, **characterized in that** a critical driving situation (U1, U2, U3, U4, U5, U6, U7, U8) of the vehicle combination (7) and a maximum speed (v-max) intended for this driving situation (U1, U2, U3, U4, U5, U6, U7, U8) are predetermined as a first safety criterion (1) and the speed (v-Ist) of the vehicle combination is used as a first braking state variable (50) and compared with the maximum speed (v-Max).

3. Method according to claim 1 or claim 2, **characterized in that** a brake slip value (v2), representing the wheel slip, of a wheel (10) of the axle (11) or an axle-related brake slip value (v2) of the axle (11), on which axle (11) the continuous braking system (17) acts, is detected as a second braking state variable, and the brake slip value (v2) is compared with a limit slip value (47) which is predetermined as a second safety criterion (2).

4. Method according to claim 3, **characterized in that** the limit slip value (47) is specified with a distance (48) to an intervention threshold (44) for the response of an anti-lock braking system (36) of the towing vehicle braking system (3).

## Revendications

1. Procédé pour la décélération d'une combinaison de véhicules (7) comportant un véhicule tracteur (5) et au moins un véhicule remorqué (6) comportant sa propre installation de frein de remorque (4), dans lequel une unité de commande de frein (30) d'une installation de frein de véhicule tracteur (3) surveille le comportement de frein du véhicule tracteur (5) ou de la combinaison de véhicules (7) et ajuste en cas de besoin la pression de frein (P) respective sur les freins de roue (13) des roues (10) concernées du véhicule tracteur (5) ainsi qu'une pression de frein de remorque (P-A), dans lequel l'unité de commande de frein (30) détecte une demande de décélération (41) manuelle du conducteur au niveau d'une installation de frein permanente (17) et surveille, pendant la commande (54) de l'installation de frein permanente (17), qu'au moins un critère de sécurité (1, 2) prédéfini est atteint à l'aide d'au moins une grandeur d'état de frein (50, 51) déterminée en continu et, lorsque le critère de sécurité (1, 2) est atteint, une partie (52) de la demande de décélération (41) à effectuer au niveau de l'installation de frein permanente (17) est effectuée par l'intermédiaire de l'installation de frein de remorque (4), **caractérisé en ce que**
un équipement électronique de frein (31) de l'installation de frein de remorque (4) détecte des valeurs de patinage de frein (vTr) des roues (10) du véhicule remorqué (6) et communique à l'unité de commande de frein (30) de l'installation de frein de véhicule tracteur (3) un signal d'information (29) comportant des renseignements concernant des valeurs de patinage de frein (vTr) du véhicule remorqué (6), dans lequel l'unité de commande de frein (30) de l'installation de frein de véhicule tracteur (3) règle, par l'intermédiaire de l'ajustement de la pression de frein (P) et de la pression de frein de remorque (P-A), une différence de patinage (SD) prédéfinie entre le véhicule tracteur (5) et le véhicule remorqué (6).

2. Procédé selon la revendication 1, **caractérisé en ce qu'**une situation de conduite (U1, U2, U3, U4, U5, U6, U7, U8) critique de la combinaison de véhicules (7) et une vitesse maximale (v-max) prévue pour ladite situation de conduite (U1, U2, U3, U4, U5, U6, U7, U8) sont prédéfinies comme premier critère de sécurité (1) et la vitesse (v-Ist) de la combinaison de véhicules est utilisée comme première grandeur d'état de frein (50) et est comparée à la vitesse maximale (v-Max).

3. Procédé selon la revendication 1 ou 2, **caractérisé en ce qu'**une valeur de patinage de frein (v2), représentant le patinage de roue, d'une roue (10) de l'essieu (11) ou une valeur de patinage de frein (v2), relative à l'essieu, de l'essieu (11) est détectée comme seconde grandeur d'état de frein (51), essieu (11) sur lequel agit l'installation de frein permanente (17), et la valeur de patinage de frein (v2) est comparée à une valeur de patinage limite (47) prédéfinie comme second critère de sécurité (2).

4. Procédé selon la revendication 3, **caractérisé en ce que** la valeur de patinage limite (47) est prédéfinie à une distance (48) par rapport à un seuil de prise (44) pour la réaction d'un antiblocage de sécurité (36) du système de frein de véhicule tracteur (3).
